# EUROPEAN PATENT APPLICATION

(11) **EP 4 657 035 A1**
(43) Date of publication of application: **03.12.2025**
(21) Application number: 24178841.3
(22) Date of filing: 29.05.2024
(51) Int. Cl.: G01J 3/14, G01J 3/28, G01J 3/36, G02B 21/00, G01J 3/02, G02B 27/28, G02F 1/33

(54) **DETECTION ARRANGEMENT FOR AN OPTICAL SCANNING MICROSCOPE AND OPTICAL SCANNING MICROSCOPE**

(71) Applicant: Leica Microsystems CMS GmbH, 35578 Wetzlar (DE)
(72) Inventor: Friedrich, Lars, 35578 Wetzlar (DE); Schumann, Christian, 35578 Wetzlar (DE)
(74) Representative: Schaumburg und Partner Patentanwälte mbB

(57) **Abstract**

A detection arrangement (102) for an optical scanning microscope (100, 900) comprises a beam splitting element (120) configured to receive descanned detection light (118), to split the detection light (118) into two parts, to direct a first part (128a) of the detection light (118) into a first beam path (130a), and to direct a second part (128b) of the detection light (118) into a second beam path (130b). The first and second beam paths (130a, 130b) each comprise a dispersive element (122a, 122b) configured to spectrally separate the detection light (118) along a spectral separation direction (132a, 132b), and an array detector (124a, 124b) configured to receive the spectrally separated detection light (118). The beam splitting element (120), the first dispersive element (122a), and the second dispersive element (122b) are configured such that a first reference direction (134a) corresponding to a first spectral separation direction (132a) imaged back via the first beam path (130a) to a plane arranged before the beam splitting element (120, 702) and a second reference direction (134b) corresponding to a second spectral separation direction (132b) imaged back via the second beam path (130b) to the plane arranged before the beam splitting element (120) are different from each other.

## Description

### Technical field

The invention relates to a detection arrangement for an optical scanning microscope. The invention further relates to an optical scanning microscope.

### Background

Image Scanning Microscopy (ISM) is an advanced fluorescence microscopy technique that improves the spatial resolution and signal-to-noise ratio beyond the capabilities of traditional confocal microscopy. In conventional confocal microscopy, a single point detector, such as a single photomultiplier tube, is used to detect the fluorescent light emitted from the sample. In the ISM approach, the point detector is replaced by a multi-element photodetector comprising a plurality of photodetector elements (pixels) arranged in a photodetector array. Each photodetector element in the array is configured to output a detector signal upon receiving fluorescent light. As the sample is scanned with a laser focus, each photodetector element detects a small image of the illuminated sample at each scan position. Appropriate algorithms are then used to combine multiple scan images to reconstruct a single high-resolution image of the sample.

While it is possible to use the information from the different photodetector elements to increase spatial image resolution and signal-to-noise ratio, one of the major limitations of current ISM is the limited usability of these photodetectors for quantifying the emitted fluorescence light in terms of its spectral content. Existing solutions, for example as described in F. Strasser et al., Biomed. Opt. Expr 10 (2019) 2513, are limited to a narrow band of the visible light spectrum and suffer from light loss due to the generation of higher diffraction orders and the use of only one polarization state.

### Summary

It is an object to provide a detection arrangement for an optical scanning microscope and an optical scanning microscope that enable spectral imaging with high spatial resolution and a high signal-to-noise ratio.

The aforementioned object is achieved by the subject-matter of the independent claims. Advantageous embodiments are defined in the dependent claims and the following description.

The proposed detection arrangement for an optical scanning microscope comprises a beam splitting element configured to receive descanned detection light, to split the detection light into two parts, to direct a first part of the detection light into a first beam path, and to direct a second part of the detection light into a second beam path. The first beam path comprises a first dispersive element configured to spectrally separate the detection light along a first spectral separation direction, and a first array detector configured to receive the spectrally separated detection light. The second beam path comprises a second dispersive element configured to spectrally separate the detection light along a second spectral separation direction, and a second array detector configured to receive the spectrally separated detection light. The beam splitting element, the first dispersive element, and the second dispersive element are configured such that a first reference direction corresponding to the first spectral separation direction imaged back via the first beam path to a plane arranged before the beam splitting element and a second reference direction corresponding to the second spectral separation direction imaged back via the second beam path to the plane arranged before the beam splitting element are different from each other.

The detection arrangement is configured to receive the detection light from a descanned arrangement and may therefore be used as the detection arrangement on an existing confocal laser scanning microscope or image scanning microscope, for example. The descanned detection light will typically correspond to the image of a small particle, which emits the detection light, for example fluorescence light, as a result of being scanned with a beam of focused illumination light, such as a laser focus used to excite fluorophores. Such a particle may be seen as a point-like source of the detection light. The descanned detection light received by the detection arrangement is split into the first and second parts by the beam splitting element. Thereby, two copies of the detection light are generated. Each copy is directed through one of the dispersive elements before it is detected by one of the array detectors. If the detection light comprises a wide band of wavelengths, the dispersive elements spectrally fan out the detection light along one of the spectral separation directions. However, if the detection light is monochromatic or is comprised of a narrow wavelength band, as is often the case in fluorescence microscopy, the dispersive elements deflect the beam of the detection light in the spectral separation directions rather than fanning the detection light out. Based on the deflection by the dispersive elements, it is therefore possible to draw conclusions about the spectral composition of the detection light. The deflection of the detection light is detected by the array detectors, which may be two-dimensional arrays of photodetector elements. By comparing subsequent images captured by the array detectors, a change in the deflection of the detection light creates an apparent movement of the image of the detection light on the respective array detector. However, the deflection of the detection light caused by the dispersive elements needs to be distinguished from a deflection caused by the scanning itself. For example, the movement of an illumination focus relative to the point-like source of the detection light may cause such a movement due to the convolution of the scanned illumination point spread function (PSF) and the point-like source. Since the detection of the detection light emitted by the point-like source is performed with the array detectors, which provide spatial information in addition to intensity information, it appears that the image of the emitting particle moves on the array detectors, even though the detection light being received by the detection arrangement is descanned. Therefore, the beam splitting element, the first dispersive element, and the second dispersive element of the proposed detection arrangement are arranged such that the first spectral separation direction is oriented differently with respect to the image of the detection light on the first array detector than the second spectral separation direction with respect to the image of the detection light on the second array detector. The movement of a point-like image due to the scanning has no preferred direction and will look similar on each of the two array detectors. However, the movement caused by the dispersive elements, for example due to a (hypothetical) color change of the particle, for example a change of wavelengths of emission light, in particular of the fluorescence light emitted by the particle, will always be in the respective spectral separation direction, which is different for each of the array detectors. Thus, the proposed detection arrangement ensures that the deflection of the detection light caused by the dispersive elements can be distinguished from a deflection caused by the scanning itself by comparing the two images captured by the two array detectors. Thereby, the proposed detection arrangement not only enables image scanning microscopy with high spatial resolution and a high signal-to-noise ratio by detecting the detection light using the two array detectors. The proposed detection arrangement further enables to reconstruct a spectral information about the detection light without the significant loss of detection light, which would compromise the signal-to-noise ratio.

In an embodiment the first reference direction and the second reference direction are opposite to each other or perpendicular to each other. In such an arrangement, the apparent movement of the image of the detection light on the array detector caused by a color change will be in opposite directions or in perpendicular directions, respectively. By choosing the reference directions such, the task of separating a movement caused by a color-change from a movement caused by the scanning itself is made easier, meaning the spectral information can be extracted even more reliably.

In another embodiment the beam splitting element is configured to mirror or to reflect the second part of the detection light directed into the second detection beam path. The beam splitting element may be a neutral beam splitter which is preferably configured to evenly split the received descanned detection light with a reflection/transmission ratio of 1 or close to 1, for example, which reflects the second part of the detection light and lets the first part of the detection light pass. Thereby, the images captured by one of the array detectors will be mirrored compared to the other array detector. This makes it possible to easily identify a movement due to the scanning by looking for a mirror symmetry. Thereby, the movement due to a color change can be isolated and the spectral information can be extracted even more reliably.

In another embodiment the beam splitting element is configured to rotate the second part of the detection light directed into the second detection beam path. In this embodiment, an image imaged along the first beam path is rotated with respect to an image imaged along the second beam path. For example, the beam splitting element may comprise an Abbe-König prism, which rotates the second part of the detection light. Similar to mirroring the second part of the detection light, rotating the second part of the detection light makes it possible to easily identify a movement due to the scanning by looking for a rotational symmetry corresponding to the rotation of the second part of the detection light.

In another embodiment the beam splitting element is configured to direct a first polarized component of the detection light into the first beam path as the first part, and to direct a second polarized component of the detection light into the second beam path as the second part. In this embodiment, the detection light is split into the first and second parts based on polarization. Assuming unpolarized light, for example fluorescence, this means that the detection light is split almost evenly. This means that the maximum possible amount of detection light is detected by each of the two array detectors, which reduces light loss and improves the signal to noise ratio.

Alternatively, such an even split may be achieved by employing a neutral beam splitter having a reflection/transmission ratio of 1 or close to 1.

In another embodiment the beam splitting element comprises an Abbe-König prism having a polarizing beam-splitter coating configured to transmit the first polarized component of the detection light, and to reflect the second polarized component of the detection light. The Abbe-König prism rotates the second polarized component of the detection light. In this embodiment, the detection light is split into the first and second parts based on polarization. In addition, the part comprising the second polarized component is rotated. Thus, the Abbe-König prism not only ensures a close to equal split between the first and second parts, but also rotates the image captured by the second array detector compared to the image captured by the first array detector. The advantages of both features are described above.

In another embodiment the beam splitting element comprises a Wollaston prism. The Wollaston prism separates the detection light based on polarization using the optical properties of birefringence. Unlike a polarizing beam splitter, the Wollaston prism does not reflect part of the detection light, and therefore both the first and second parts of the detection light maintain their original orientation. This may be used to capture identical images using the array detectors, making it easier to isolate the movement due to color change.

In another embodiment at least one of the first dispersive element and the second dispersive element comprise at least one dispersing prism. Dispersion prisms work with light in a broad wavelength range that includes the visible spectrum and part of the infrared and ultraviolet spectrum. Further, dispersing prisms do not generate higher orders of diffraction that can occur with diffraction gratings. The higher orders may not be picked up by the array detectors. Thus, using dispersing prisms prevents light loss and improves the signal to noise ratio.

In another embodiment the first dispersive element comprises a first dispersing prism and the second dispersive element comprises a second dispersing prism. An orientation of the first dispersing prism and an orientation of the second dispersing prism are related by a single rotation around an axis of rotation. For example, the axis of rotation may be parallel to a lateral edge of the first dispersing prism. This is the case when the first and second beam paths are perpendicular to each other, for example, and comprise no further reflecting elements. Combined with a beam splitting element that reflects the second part of the detection light, this results in the first and second reference directions being opposite to each other, which has the above-described advantages. Further, in such an embodiment, the optical arrangement of the first beam path and the second beam path is particularly simple.

In another embodiment the first dispersive element comprises a first dispersing prism and the second dispersive element comprises a second dispersing prism. The second dispersing prism is rotated about an optical axis compared to the first dispersing prism. For example, the second dispersing prism is rotated about the optical axis in front of the beam splitting element or is rotated about the optical axis at the second prism, where the second part of the detection light enters the second prism. The rotation may be 90° or 180° in particular. This results in the first and second reference directions being perpendicular to each other or opposite each other, respectively, which has the above-described advantages.

In another embodiment the first dispersive element and the second dispersive element are realized by different surfaces of one dispersing prism. For example, the first and second dispersive elements may be realized by two different lateral faces of a single dispersing prism. Such a configuration may be advantageously employed in combination with a beam splitting element that separates the detection light into two beams enclosing an acute angle, in particular an angle less than 45°, for example the Wollaston prism.

In another embodiment the first dispersive element and the second dispersive element are realized by identical surfaces of one dispersing prism. For example, the first and second beam paths are made parallel before they are directed into the dispersing prism. Using the one dispersing prism ensures consistent alignment and a comparable dispersion of the detection light in the two beam paths. Further, in this embodiment, the optical configuration of the detection arrangement can be made especially compact.

In another embodiment at least one of the first dispersive element and the second dispersive element comprises at least one of a planar grating, preferably a blazed grating, a grism, and a diffractive optical element. In particular blazed gratings offer a high diffraction efficiency in a predetermined diffraction order, which reduces light loss and improves the signal-to-noise ratio. Grisms combine a dispersing prism with a grating and exhibit a very low chromatic aberration. Diffractive optical elements allow for more complex light manipulation, making it possible to control the beam shape, providing precise control over the phase and amplitude of the detection light.

In another embodiment the first beam path comprises no or at least one first reflective element, and the second beam path comprises no or at least one second reflective element. The number of first reflective elements and the number of second reflective elements are both even or both odd. In other words, the numbers of reflective elements in the first beam path and the second beam path are both even or both odd, wherein zero is treated as an even number. This ensures that the relative parity of the images created by the beam splitting element is not changed by the reflective elements arranged in the first and second beam paths. For example, if the beam splitting element mirrors the second part of the detection light, the images captured by the first and second array detectors will be mirrored. This makes it possible to have different reference directions even if the first dispersive element and the second dispersive element are realized by the identical surfaces of one dispersing prism.

It is further advantageous if the optical path length from a focal plane of the optical scanning microscope to the first array detector is equal to the optical path length from the focal plane of the optical scanning microscope to the second array detector. This makes it possible to maintain consistency between the images captured by the first and second array detectors, and simplifies the optical design of the detection arrangement.

In another embodiment the detection arrangement comprises a pinhole. Preferably, the pinhole is arranged upstream of the beam splitting element, i.e. before the beam splitting element. The pinhole excludes out-of-focus light, thereby enhancing the imaging quality.

The invention also relates to an optical scanning microscope. The optical scanning microscope comprises an excitation light source configured to generate excitation light, an objective lens directed at a sample space and configured to direct the excitation light into the sample space and to receive the detection light from the sample space, and a scanning unit arranged along a beam path between the excitation light source and the objective lens and configured to selectively direct the excitation light into different regions of the sample space via the objective lens, for example in a meandering fashion. The optical scanning microscope further comprises a detection arrangement as described above, and a main beam splitter configured to direct the excitation light into the objective lens via the scanning unit, and to direct the detection light into the detection arrangement.

The optical scanning microscope has the same advantages as the detection arrangement described above. In particular, the optical scanning microscope may be supplemented with the features described in this document in connection with the detection arrangement. Furthermore, the detection arrangement described above may be supplemented with the features described in this document in connection with the optical scanning microscope.

In an embodiment the optical scanning microscope further comprises an acousto-optical device being arranged downstream of the main beam splitter or being a part of the main beam splitter. The acousto-optical device is configured to receive the descanned detection light and to selectively direct a part of the detection light into the detection arrangement and to direct a further part of the detection light not into the detection arrangement. The excitation light may be reflected in the sample space and by passing the main beam splitter leak into the detection arrangement. The acousto-optical device can be controlled to selectively deflect certain wavelengths or wavelength band. This property is used to deflect the leaked excitation light away from the detection arrangement. An exemplary main beam splitter comprising an acousto-optical device is disclosed in WO 99/42884 A1.

In another embodiment the excitation light source is a pulsed laser light source and at least one of the array detectors of the detection arrangement is configured to record the arrival times of individual photons with respect to a laser pulse generated by the excitation light source. By recording the arrival times of individual photons with respect to a reference signal, it is possible to determine fluorescence lifetime characteristics using the optical scanning microscope. This makes it possible to use the optical scanning microscope for fluorescence microscopy applications such as Fluorescence Lifetime Imaging Microscopy (FLIM).

### Short Description of the Figures

Hereinafter, specific embodiments are described referring to the drawings, wherein:
- Figure 1: is a schematic view of an optical scanning microscope comprising a detection arrangement according to an embodiment;
- Figure 2: is a schematic view of the detection arrangement according to an embodiment comprising two dispersive elements whose orientations are related by a rotation around a single axis;
- Figure 3: is a schematic view of the detection arrangement according to an embodiment comprising the two dispersive elements whose orientations are related by a mirror symmetry;
- Figure 4: is a schematic view of the detection arrangement according to an embodiment comprising the two dispersive elements whose orientations are related by a rotation about an optical axis;
- Figure 5: is a schematic view of the detection arrangement according to another embodiment where the two dispersive elements are formed by identical surfaces of a dispersing prism;
- Figure 6: is a schematic view of the detection arrangement according to another embodiment comprising a Wollaston prism;
- Figure 7: is a schematic view of the detection arrangement according to another embodiment comprising the Wollaston prism and an Abbe-König prism;
- Figure 8: is a schematic view of the Abbe-König prism having a polarizing beam splitter coating; and
- Figure 9: is a schematic view of an optical scanning microscope according to another embodiment comprising an acousto-optical device.

### Detailed Description

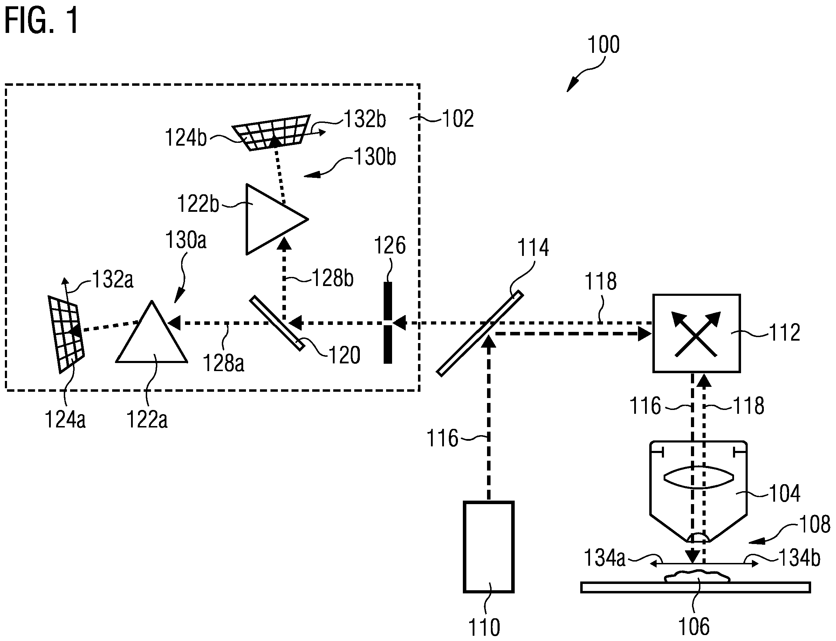

Figure 1 is a schematic view of an optical scanning microscope 100 comprising a detection arrangement 102 according to an embodiment. The optical scanning microscope 100 exemplary comprises a single objective lens 104 directed at a sample 106 arranged in a sample space 108. The optical scanning microscope 100 further comprises an excitation light source 110, a scanning unit 112, and a main beam splitter 114.

The excitation light source 110 is configured to generate excitation light 116, in particular excitation light 116 with a single wavelength or a narrow wavelength band. The excitation light source 110 may comprise one or more lasers to generate laser light as the excitation light 116. In particular, the excitation light source 110 may comprise a continuum laser and an arrangement of exchangeable filters or a tunable laser to selectively generate excitation light 116 with different wavelengths. The excitation light source 110 may comprise further optical elements such as lenses and apertures for forming a beam from the excitation light 116. The excitation light 116 generated by the excitation light source 110 is directed by the main beam splitter 114 towards the scanning unit 112. The scanning unit 112 is configured to deflect the excitation light 116 to selectively direct the excitation light 116 into different regions of the sample space 108 via the objective lens 104. This makes it possible to scan the sample 106 using the excitation light 116 focused by the objective lens 104. To deflect the excitation light 116, the scanning unit 112 may comprise one or more galvanometric mirrors or acousto-optic deflectors, for example. The beam path of the excitation light is shown in Figure 1 using a dashed line originating at the excitation light source 110 and ending at the sample 106.

By illuminating the sample 106 using the excitation light 116 detection light 118 is generated. The detection light 118 is collected by the objective lens 104 and directed back towards the main beam splitter 114 via the scanning unit 112. Due to the arrangement of the scanning unit 112 between the main beam splitter 114 and the objective lens 104, the deflection of the excitation light 116 is reversed for the detection light 118. This directs the detection light 118 towards a single point regardless of a deflection angle of the scanning unit 112. The detection light 118 has been descanned, so to speak. The descanned detection light 118 is then directed by the main beam splitter 114 into the detection arrangement 102. The beam path of the detection light 118 is shown in Figure 1 using a dotted line originating at the sample 106.

The detection arrangement 102 comprises a beam splitting element 120, a first dispersive element 122a, a second dispersive element 122b, a first array detector 124a, and a second array detector 124b. As an example only, the detection arrangement 102 further comprises a pinhole 126 arranged at the conjugate image plane.

The detection light 118 is received by the detection arrangement 102 via the pinhole 126, which limits the beam diameter of the detection light 118 that passes on into the detection arrangement 102 and/or which suppresses light originating from out of focus regions of the sample space 108 and only allows detection light 118 originating from the focus region of the objective lens 104 to pass into the detection arrangement 102. Following the pinhole 126, the detection light 118 reaches the beam splitting element 120. In the present embodiment, the beam splitting element 120 is a neutral beam splitter which splits incident light into two nearly identical parts. A first part 128a of the detection light 118 is directed into a first beam path 130a comprising the first dispersive element 122a, and the first array detector 124a. A second part 128b of the detection light 118 is directed into a second beam path 130b comprising the second dispersive element 122b, and the second array detector 124b. The dispersive elements 122a, 122b are exemplary shown as dispersive prisms. However, the dispersive elements 122a, 122b may comprise one or more of the following: a dispersing prism, a planar grating, preferably a blazed grating, a grism, and a diffractive optical element.

In each of the two beam paths 130a, 130b, the detection light 118 first passes through one of the dispersive elements 122a, 122b. Each of the dispersive elements 122a, 122b spectrally separates the detection light 118 along a spectral separation direction 132a, 132b by deflecting the detection light 118 based on the wavelength of the detection light 118. For example, the dispersive elements 122a, 122b may deflect shorter wavelengths more than longer wavelengths. The spectral separation directions 132a, 132b may coincide with each other but are in principle independent of each other. The first dispersive element 122a spectrally separates the detection light 118 along a first spectral separation direction 132a and the second dispersive element 122b spectrally separates the detection light 118 along a second spectral separation direction 132b.

The spectrally separated detection light 118 is then received by the array detectors 124a, 124b. Each of the array detectors 124a, 124b comprises an array of photodetector elements, preferably a two-dimensional array of photodetector elements, for example photodiodes such as single-photon avalanche diodes (SPAD), or photomultiplier tubes (PMT) such as gallium arsenide phosphide (GaAsP) PMT. Each photodetector element acts as a single pixel detector that captures part of the spectrally separated detection light 118 at a different position in the array. Thus, the array detectors 124a, 124b make it possible to detect the spatial distribution of the intensity of the spectrally separated detection light 118. As the sample 106 is scanned with the excitation light 116, at least one spatial distribution is detected at each scan position by each of the array detectors 124a, 124b. From the collection of the spatial distributions a single high-resolution image of the sample 106 can be reconstructed. This imaging technique is known as Image Scanning Microscopy (ISM), which has an increased spatial resolution and signal-to-noise ratio compared to conventional Confocal Laser-Scanning Microscopy (CLSM).

During scanning the sample 106, a single particle, for example a single fluorophore, may be imaged multiple times in consecutive steps. The movement of the excitation light 116 may therefore cause a movement of the image of the particle on the array detectors 124a, 124b. Likewise, a color change of the particle results in a different angle of deflection by the dispersive elements 122a, 122b, and thus an apparent movement of the image. By distinguishing these two types of movement it is possible to extract spectral information, expanding the capabilities of the ISM technique.

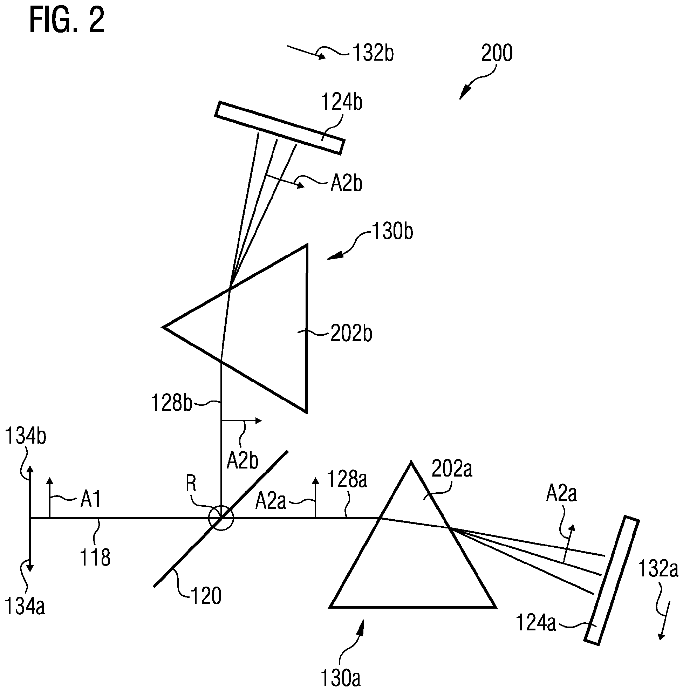

The beam splitting element 120, the first dispersive element 122a, and the second dispersive element 122b are arranged and configured in such a way that facilitates the computational unmixing of the effects of the scanning and the spectral separation. When the first spectral separation direction 132a is imaged back into the sample 106, it defines a first reference direction 134a that is perpendicular to the optical axis of the objective lens 104. Likewise, when the second spectral separation direction 132b is imaged back into the sample 106, it defines a second reference direction 134b that is also perpendicular to the optical axis of the objective lens 104. The aforementioned elements are arranged and configured such that the first reference direction 134a and the second reference direction 134b are different, for example perpendicular to each other. In other words, the first spectral separation direction 132a is oriented differently with respect to the image of the detection light 118 on the first array detector 124a than the second spectral separation direction 132b with respect to the image of the detection light 118 on the second array detector 124b. Various embodiments of the detection arrangement 102 are described below with reference to Figures 2 to 8, which implement such a configuration.

In order to unmix of the effects of the scanning and the spectral separation, a multi-view-deconvolution algorithm may be used, for example, that finds the reconstructed image by minimizing a difference between the detected spatial distributions and reconstructed signals. The reconstructed signals may be computed from an estimated reconstructed image using a model for the signal formation. The multi-view-deconvolution may also be combined with a pixel-reassignment method. For example, the pixel-reassignment can be conducted in the direction perpendicular to the spectral separation directions 132a, 132b and the multi-view-deconvolution can be conducted along the spectral separation directions 132a, 132b.

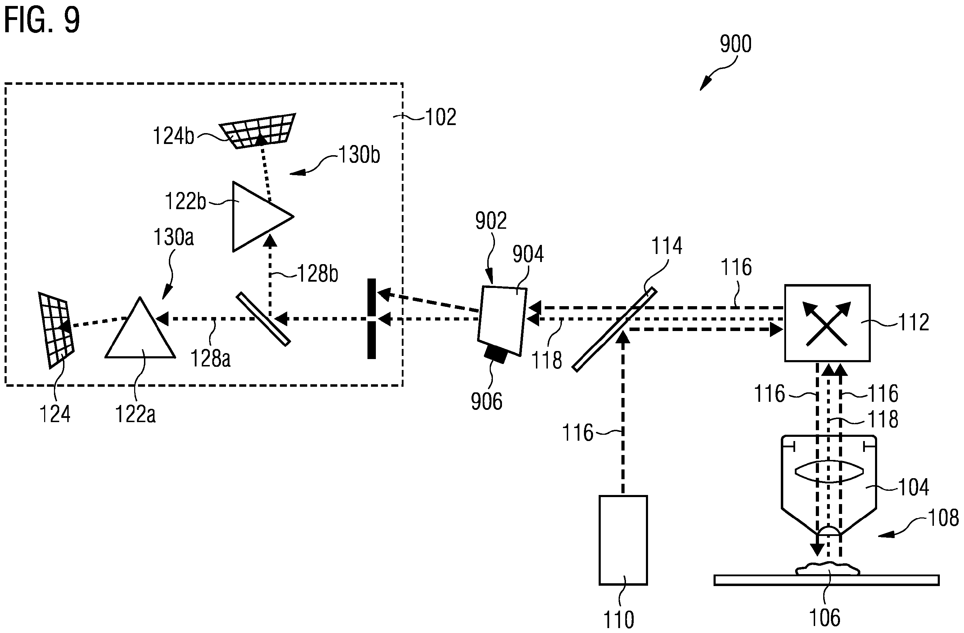

The detection light 118 may comprise fluorescence light generated by fluorophores that were excited by the excitation light 116. However, the detection light 118 may also comprise small amounts of excitation light 116, which have been reflected in the sample space 108, for example. This excitation light 116 may leak through the main beam splitter 114 into the detection arrangement 102, or, in other words, leak into the detection arrangement 102. An embodiment which addresses this leaking of excitation light 116 is described below with reference to Figure 9.

Figure 2 is a schematic view of the detection arrangement 200 according to an embodiment.

The detection arrangement 200 according to Figure 2 comprises the beam splitting element 120, which is exemplary formed as a neutral beamsplitter having a reflection/transmission ratio of 1. Such a beamsplitter is also called a 50:50 beam splitter. The beam splitting element 120 reflects the second part 128b of the detection light 118, thereby mirroring it. In Figure 2, a first arrow A1 indicates a movement of an imaged particle, for example a single fluorophore, relative to the optical axis. Further arrows A2a, A2b show the direction an image of the particle moves relative to the optical axes in the first and second beam paths 130a, 130b, respectively. As can be seen, the movement in the second beam path 130b is mirrored compared to the movement in the first beam path 130a due to the second part 128b of the detection light 118 being reflected by the beam splitting element 120.

The detection arrangement 200 further comprises the two dispersive elements 202a, 202b exemplary formed as dispersive prisms having a triangular base. The triangular bases of the two dispersive prisms are parallel. The orientations of the dispersive elements 202a, 202b are related only by a rotation around one axis R. In Figure 2, this axis R is perpendicular to plane of the drawing, intersecting the plane of the drawing where the detection light 118 is split into the first and second beam paths 130a, 130b. Put differently, the orientations of the dispersive elements 202a, 202b are related by a rotation about the lateral edge of the dispersive prisms and a lateral displacement. This arrangement of the dispersive elements 202a, 202b combined with the detection light 118 in the second beam path 130b being mirrored results in the first spectral separation direction 132a being oriented differently with respect to the image of the detection light 118 on the first array detector 124a than the second spectral separation direction 132b with respect to the image of the detection light 118 on the second array detector 124b. The embodiment shown in Figure 2 realizes a detection arrangement 200 in which the first reference direction 134a and the second reference direction 134b are opposite each other.

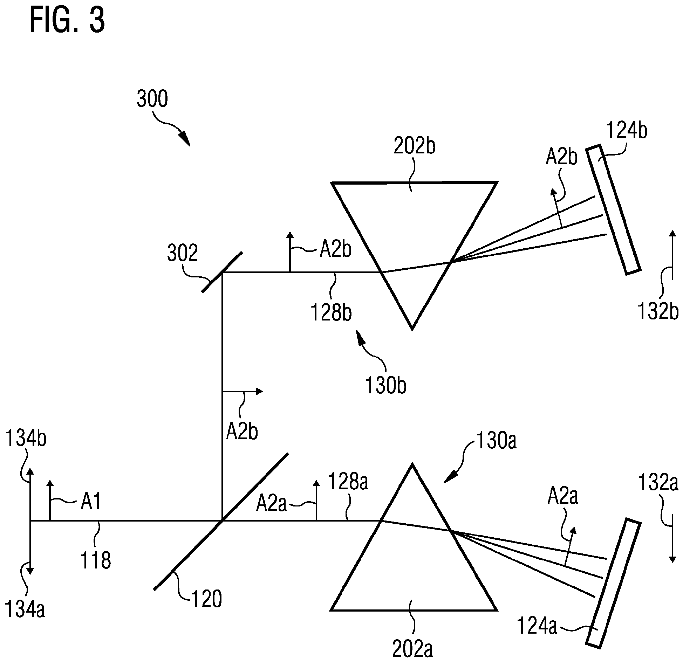

Figure 3 is a schematic view of the detection arrangement 300 according to another embodiment. The detection arrangement 300 according to Figure 3 is distinguished from the detection arrangement 200 according to Figure 2 in the orientations of the dispersive elements 202a, 202b, and in comprising an additional reflective element 302 in the second beam path 130b.

The reflective element 302 is arranged such in the second beam path 130b that the first and second beam paths 130a, 130b are made parallel before hitting the first and second dispersive elements 202a, 202b, respectively. The second reflection in the second beam path 130b restores the parity of the images of the detection light 118 in the two beam paths 130a, 130b, meaning unlike in the embodiment described above with reference to Figure 2, the images on the first and second array detectors 124a, 124b are not mirrored. Like in Figure 2, in Figure 3 the first arrow A1 indicates a movement of an imaged particle relative to the optical axis and the further arrows A2a, A2b show the direction an image of the particle moves relative to the optical axes in the first and second beam paths 130a, 130b, respectively.

Like in the embodiment described above with reference to Figure 2, the bases of the two dispersive prisms that form the dispersive elements 202a, 202b are parallel and exemplary formed as triangular bases. However, unlike in the embodiment described above with reference to Figure 2, the orientations of the dispersive elements 202a, 202b are related by a mirror symmetry. This results in the first spectral separation direction 132a being down in Figure 3 and the second spectral separation direction 132b being up in Figure 3, i.e. the first and second spectral separation directions 132a, 132b are pointing away from each other. This fact combined with the parity of the images on the first and second array detectors 124a, 124b being equal results in the first reference direction 134a and the second reference direction 134b being opposite each other.

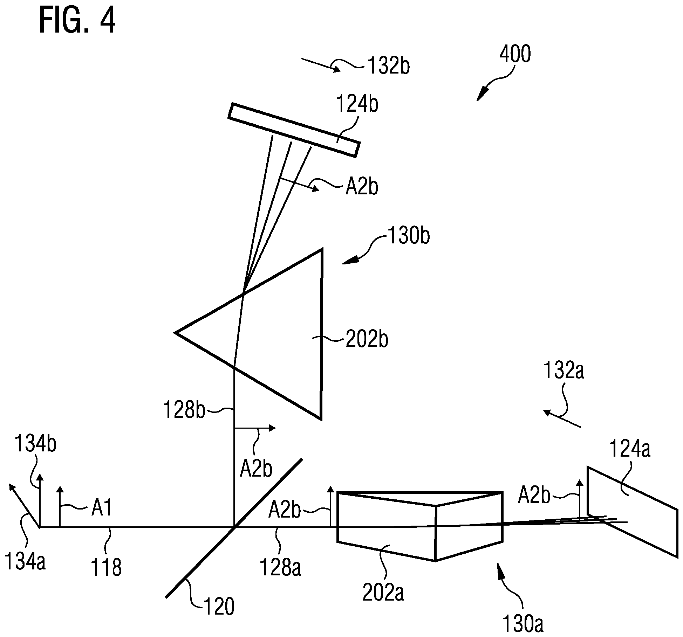

Figure 4 is a schematic view of the detection arrangement 400 according to another embodiment. The detection arrangement 400 according to Figure 4 is distinguished from the detection arrangement 200 according to Figure 2 in that the orientations of the dispersive elements 202a, 202b are related by a rotation about an optical axis.

The second dispersive element 202b is rotated about 90° about the optical axis compared to the first dispersive element 202a, where the optical axis upstream of the beam splitting element 120 is used as the reference. This arrangement combined with the mirror symmetry between the images on the first and second array detectors 124a, 124b results in the first reference direction 134a and the second reference direction 134b being perpendicular to each other.

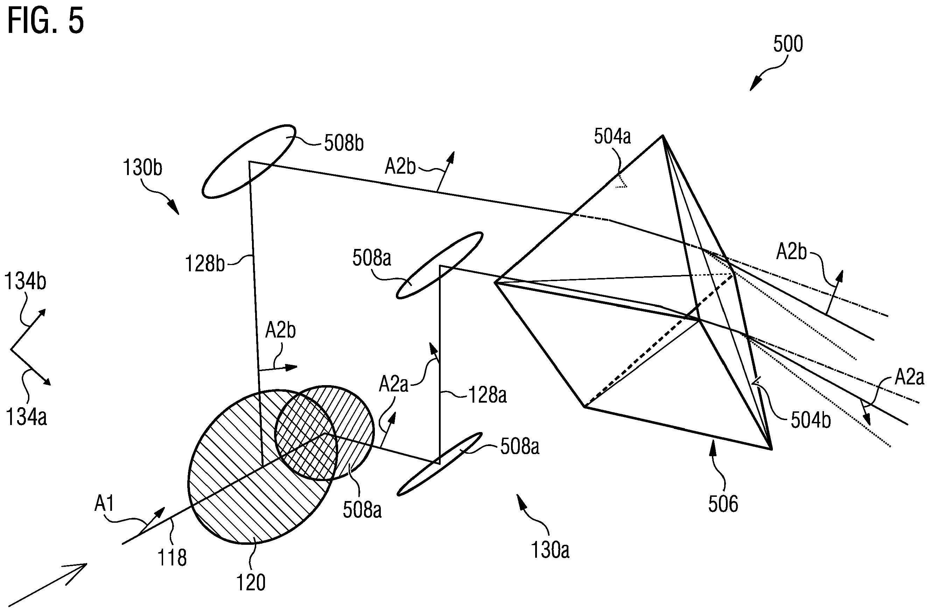

Figure 5 is a schematic view of the detection arrangement 500 according to another embodiment. In the embodiment shown in Figure 5 the two dispersive elements 502a, 502b are formed by identical surfaces 504a, 504b of a single dispersing prism 506, which exemplary has a triangular base.

The detection arrangement 500 according to Figure 5 comprises the beam splitting element 120, which may be a neutral 50:50 beam splitter. The first part 128a of the detection light 118 is formed by the detection light 118 which passed through the beam splitting element 120 into the first beam path 130a. The second part 128b of the detection light 118 is formed by the detection light 118 which is reflected by the beam splitting element 120 into the second beam path 130b. This means that the second part 128b of the detection light 118 is mirrored compared to the first part 128a of the detection light 118 immediately following the beam splitting element 120. The first beam path 130a comprises three reflective elements 508a directing the first part 128a of the detection light 118 onto a first surface 504a of the dispersing prism 506. The first part 128a of the detection light 118 passes the dispersing prism 506 and exits the dispersing prism 506 via a second surface 504b. Dispersion, i.e. the wavelength-dependent variation in the refractive index, causes different wavelengths of the detection light 118 to be refracted at different angles. Thus, the first and second surfaces 504a, 504b of the dispersing prism 506 form the first dispersive element 502a. The second beam path 130b comprises only one reflective element 508b directing the second part 128b of the detection onto the first surface 504a of the dispersing prism 506. Like the first part 128a, the second part 128b of the detection light 118 passes the dispersing prism 506 and exits the dispersing prism 506 via the second surface 504b. Thus, the first and second surfaces 504a, 504b of the dispersing prism 506 also form the second dispersive element 502b. This results in the first spectral separation direction 132a being equal to the second spectral separation direction 132b.

The number of reflective elements 508a in the first beam path 130a and the number of reflective elements 508b in the second beam path 130b are both odd - three and one, respectively. This means that the mirror symmetry of the first and second parts 128a, 128b of the detection light 118 is preserved. Alternatively, the number of reflective elements 508a in the first beam path 130a and the number of reflective elements 508b in the second beam path 130b may both be even, for example four and two, respectively. This would restore the parity of the images captured by the first and second array detectors 124a, 124b.

One of the reflective elements 508a in the first beam path 130a is arranged such that the first part 128a of the detection light 118 is not only mirrored, but also rotated. As in Figure 2, the first arrow A1 indicates a movement of an imaged particle relative to the optical axis and the further arrows A2a, A2b show the direction an image of the particle moves relative to the optical axes in the first and second beam paths 130a, 130b, respectively. As can be seen in Figure 5, the images on the first and second array detectors 124a, 124b are not only mirrored, but also rotated relative to each other by an angle of 90°. Since the first and second spectral separation directions 132a, 132b are equal, this results in the first reference direction 134a and the second reference direction 134b being perpendicular to each other.

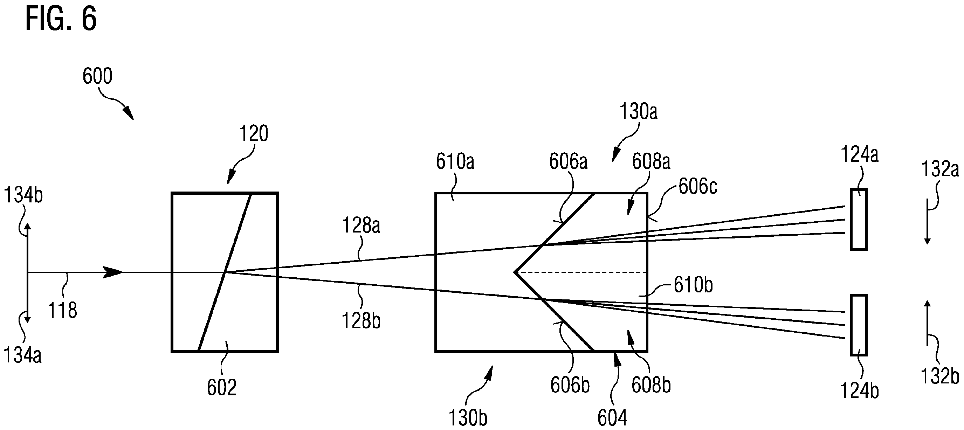

Figure 6 is a schematic view of the detection arrangement 600 according to another embodiment. In this embodiment, the beam splitting element 120 comprises a Wollaston prism 602 which splits the detection light 118 according to polarization.

The Wollaston prism 602 splits the incoming detection light 118 into two orthogonally polarized beams that diverge at a specific angle, thereby generating the first and second parts 128a, 128b of the detection light 118. The first part 128a of the detection light 118 is then directed onto a first surface 606a of a dispersing prism 604. The second part 128b of the detection light 118 is directed onto a second surface 606b of the same dispersing prism 604. The first and second surfaces 606a, 606b exemplary enclose an angle of 90°. Both the first and second parts 128a, 128b of the detection light 118 exit the dispersing prism 604 via a third surface 606c before they are directed onto the first and second array detectors 124a, 124b, respectively. Thus, in the embodiment shown in Figure 6, the first surface 606a and the third surface 606c of the dispersing prism 604 form the first dispersive element 608a, and the second surface 606b and the third surface 606c of the dispersing prism 604 form the second dispersive element 608b. In this embodiment, the first and second dispersive elements 608a, 608b may also be seem as two dispersive prisms each having a base in the shape of a four-sided polygon, wherein the fourth side shown in Figure 6 as a dashed line is shared. Due to the arrangement of the first and second surfaces 606a, 606b, the first and second spectral separation directions 132a, 132b are opposite each other, the first spectral separation direction 132a being down and the second spectral separation direction 132b being up in Figure 6. In this embodiment, this results in the first reference direction 134a and the second reference direction 134b also being opposite each other.

In the embodiment shown in Figure 6, the dispersing prism 604 forming the dispersive elements is exemplary made from two parts 610a, 610b, which together form a cuboid. Each part 610a, 610b is made from a different material. The refractive indices of the different materials are chosen such, that the dispersing prism 604 effectively acts as a parallel plate for a predetermined central wavelength. This minimizes astigmatism, and thereby improves the imaging quality. Similar dispersing prisms combining two different materials that effectively act as a parallel plate for a predetermined central wavelength can be employed in any embodiment that uses a dispersing prism as the first dispersive element 122a, 202a, 502a, 608a, 710a and/or the second dispersive element 122b, 202b, 502b, 608b, 710b.

In general, the spectral dispersion realized by the dispersive elements 122a, 122b, 202b, 202b, 502a, 502b, 608a, 608b, 710a, 710b in relation to the diffraction limit, i.e. the size of the point spread function (PSF), can be adjusted by the material selection, and cut angle of the dispersing prism; and by the overall optical design of the detection arrangement 102, 200, 300, 400, 500, 600, 700, for example choosing the focal lengths and pupil diameters accordingly. The choice of the spectral dispersion depends on the desired balance between spectral resolution and signal-to-noise ratio for the detection arrangement 102, 200, 300, 400, 500, 600, 700, and also on economical considerations concerning the number of array detectors 124a, 124b, which necessarily also include read-out electronics.

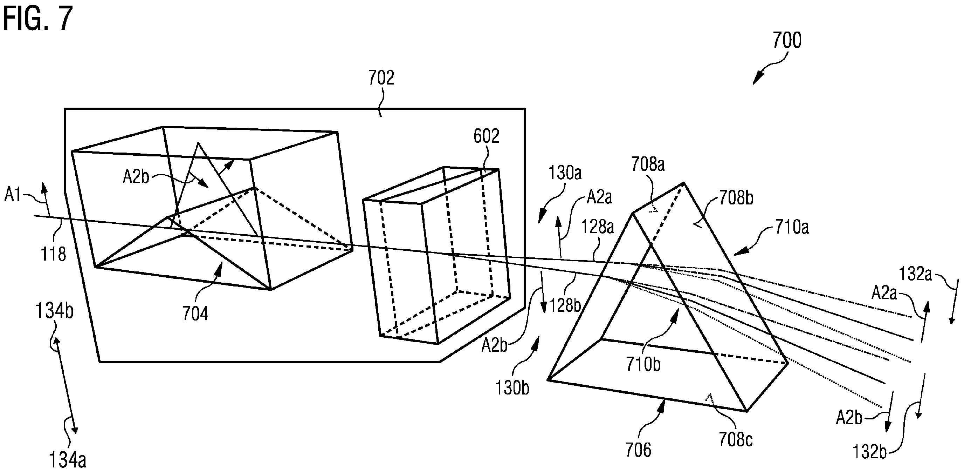

Figure 7 is a schematic view of the detection arrangement 700 according to another embodiment. The detection arrangement 700 according to Figure 7 is distinguished from the detection arrangement 600 according to Figure 6 in that the beam splitting element 702 additionally comprises an Abbe-König prism 704 having a polarizing beam splitter coating.

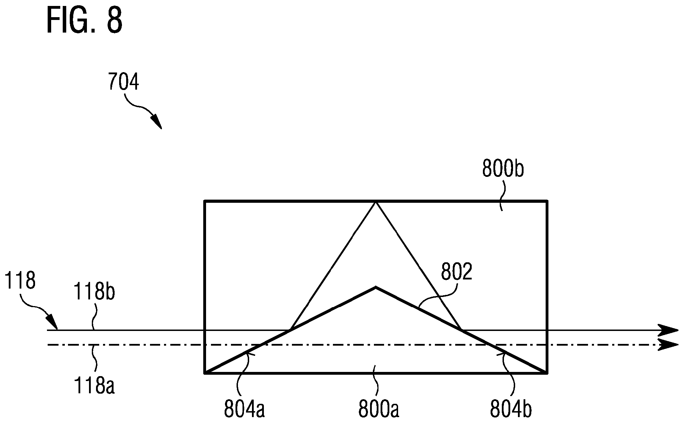

The Abbe-König prism 704 rotates one polarized component 118b of the detection light 118 while the other polarized component 118a passes the Abbe-König prism 704 unrotated. Which polarization is rotated is determined by the polarizing beam splitter coating. The detection light 118 then hits the Wollaston prism 602, which generates the first and second parts 128a, 128b of the detection light 118 by deflecting the two polarized components 118a, 118b at different angles. The principle of operation of the Abbe-König prism 704 is explained in more detail below with reference to Figure 8.

Only exemplary, the detection arrangement 700 according to Figure 7 comprises a dispersing prism 706 having two surfaces 708a, 708b which form the first and second dispersive element 710a, 710b. As in the embodiment described above with reference to Figure 5, this results in the first and second spectral separation directions 132a, 132b being equal. Further, the Wollaston prism 602 is arranged such that the first and second beam paths 130a, 130b lie in a plane that is parallel to lateral edges of the dispersing prism 706, or, in other words, to a third surface 708c of the triangular dispersing prism 706. This results in the first beam path 130a and the second beam path 130b intersecting with the first surface 706a at the same height over the third surface 708c.

As in Figure 2, the first arrow A1 indicates a movement of an imaged particle relative to the optical axis and the further arrows A2a, A2b show the direction an image of the particle moves relative to the optical axes for both polarized components 118a, 118b. As can be seen in Figure 7, since the first and second spectral separation directions 132a, 132b are equal, the rotation of one of the polarized components 118a, 118b results in the first and second reference directions 134a, 134b being opposite.

The embodiments of the detection arrangement 200, 300, 400, 500, 600, 700 shown in Figures 2 to 7 do not explicitly comprise the pinhole 126. However, the pinhole 126 may be arranged upstream of the beam splitting element 120, 702, i.e. the direction the detection light 118 is coming from, in any embodiment.

Figure 8 is a schematic view of the Abbe-König prism 704 having the polarizing beam splitter coating.

The Abbe-König prism 704 comprises two parts 800a, 800b. A first part 800a is shaped like an isosceles triangle having a vertex angle of 125° and is arranged at the bottom in Figure 8. A second part 800b is cuboid-shaped having a notch 802 at the bottom. The notch 802 is dimensioned such that the first part 800a can be received in it without an air gap being formed between the first and second parts 800a, 800b. Thus, the first and second parts 800a, 800b contact each other forming a first optical surface 804a and a second optical surface 804b enclosing the angle of 125°. Each of the two optical surfaces 804a, 804b is coated with the polarizing beam splitter coating.

A first polarized component 118a of the detection light 118 is shown in Figure 8 by a dotted-dashed line, and the second polarized component 118b of the detection light 118 is shown in Figure 8 by a solid line. The first polarized component 118a is not reflected by the polarizing beam splitter coating, and thus passes the first and second optical surfaces 804a, 804b without deflection. In contrast, the second polarized component 118a is reflected by the polarizing beamsplitter coating. Thus, the second polarized component 118b is reflected at the first optical surface 804a toward the top of the second part 800b. At the top of the second part 800b, the second polarized component experiences total reflection and is reflected back down. The second polarized component is then reflected by the second optical surface 804b, and thereby made parallel to the first polarized component 118a again. Both the first and second polarized components 118a, 118b exit the Abbe-König prism 704 parallel, but the optical path length of the second polarized component 118b through the Abbe-König prism 704 is longer.

Figure 9 is a schematic view of an optical scanning microscope 900 according to another embodiment. The optical scanning microscope 900 according to Figure 9 is distinguished from the optical scanning microscope 100 according to Figure 1 in comprising an acousto-optical device 902.

The acousto-optical device 902 is exemplary arranged downstream of the main beam splitter 114. However, the acousto-optical device 902 may also be a part of the main beam splitter 114, which may be formed as an acousto-optical main beam splitter. The acousto-optical device 902 comprises an acousto-optical medium 904, and a transducer 906. A radio frequency applied to the transducer 906 generates sound waves in the acousto-optical medium 904, which locally affect the refractive index of the acousto-optical medium 904. This anisotropy of the refractive index creates a refractive grating in the acousto-optical medium 904 whose properties are determined by the radio frequency applied to the transducer 906. This refractive grating causes a diffraction of the light 116, 118 approaching the acousto-optical device 902 into multiple orders based on the frequency and amplitude of the acoustic waves, and thus the radio frequency applied to the transducer 906.

In the present embodiment of the optical scanning microscope 900, the acousto-optical device 902 is used to selectively deflect a part of the detection light 118 away from the detection arrangement 102, for example by directing the part of the detection light 118 into a beam dump or away from an opening the pinhole 126. For example, wavelengths of the excitation light 116 may be deflected away from the detection arrangement 102, preventing the excitation wavelength from leaking into the detection arrangement 102. Similarly, the acousto-optical device 902 may be operated to let only detection light 118 with predetermined wavelengths pass into the detection arrangement 102, for example the emission wavelengths of one or more specific fluorophores arranged in the sample 106.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Optical scanning microscope
- 102: Detection arrangement
- 104: Objective lens
- 106: Sample
- 108: Sample space
- 110: Excitation light source
- 112: Scanning unit
- 114: Main beam splitter
- 116: Excitation light
- 118: Detection light
- 118a, 118b: Polarized component
- 120: Beam splitting element
- 122a, 122b: Dispersive element
- 124a, 124b: Array detector
- 126: Pinhole
- 128a, 128b: Part of the detection light
- 130a, 130b: Beam path
- 132a, 132b: Spectral separation direction
- 134a, 134b: Reference direction
- 200: Detection arrangement
- 202a, 202b: Dispersive element
- 300: Detection arrangement
- 302: Reflective element
- 400: Detection arrangement
- 500: Detection arrangement
- 502a, 502b: Dispersive element
- 504a, 504b: Surface
- 506: Dispersing prism
- 508a, 508b: Reflective element
- 600: Detection arrangement
- 602: Wollaston prism
- 604: Dispersing prism
- 606a, 606b, 606c: Surface
- 608a, 608b: Dispersive element
- 610a, 610b: Part
- 700: Detection arrangement
- 702: Beam splitting element
- 704: Abbe-König prism
- 706: Dispersing prism
- 708a, 708b, 708c: Surface
- 710a, 710b: Dispersive element
- 800a, 800b: Part
- 802: Notch
- 804a, 804b: Optical surface
- 900: Optical scanning microscope
- 902: Acousto-optical device
- 904: Acousto-optical medium
- 906: Transducer
- A1, A2a, A2b: Arrow
- R: Axis of rotation

## Claims

1. A detection arrangement (102, 200, 300, 400, 500, 600, 700) for an optical scanning microscope (100, 900), the detection arrangement (102, 200, 300, 400, 500, 600, 700) comprising
a beam splitting element (120, 702) configured to receive descanned detection light (118), to split the detection light (118) into two parts (128a, 128b), to direct a first part (128a) of the detection light (118) into a first beam path (130a), and to direct a second part (128b) of the detection light (118) into a second beam path (130b);
the first beam path (130a) comprising a first dispersive element (122a, 202a, 502a, 608a, 710a) configured to spectrally separate the detection light (118) along a first spectral separation direction (132a), and a first array detector (124a) configured to receive the spectrally separated detection light (118); and
the second beam path (130b) comprising a second dispersive element (122b, 202b, 502b, 608b, 710b) configured to spectrally separate the detection light (118) along a second spectral separation direction (132b), and a second array detector (124b) configured to receive the spectrally separated detection light (118);
wherein the beam splitting element (120, 702), the first dispersive element (122a, 202a, 502a, 608a, 710a), and the second dispersive element (122b, 202b, 502b, 608b, 710b) are configured such that a first reference direction (134a) corresponding to the first spectral separation direction (132a) imaged back via the first beam path (130a) to a plane arranged before the beam splitting element (120, 702) and a second reference direction (134b) corresponding to the second spectral separation direction (132b) imaged back via the second beam path (130b) to the plane arranged before the beam splitting element (120, 702) are different from each other.

2. The detection arrangement (102, 200, 300, 400, 500, 600, 700) according to claim 1, wherein the first reference direction (134a) and the second reference direction (134b) are opposite to each other or perpendicular to each other.

3. The detection arrangement (102, 200, 300, 400, 500) according to claim 1 or 2, wherein the beam splitting element (120) is configured to mirror the second part (128b) of the detection light (118) directed into the second detection beam path.

4. The detection arrangement (700) according to any one of the preceding claims, wherein the beam splitting element (702) is configured to rotate the second part (128b) of the detection light (118) directed into the second detection beam path.

5. The detection arrangement (600, 700) according to any one of the preceding claims, wherein the beam splitting element (120, 702) is configured to direct a first polarized component of the detection light (118) into the first beam path (130a) as the first part (128a), and to direct a second polarized component of the detection light (118) into the second beam path (130b) as the second part (128b).

6. The detection arrangement (700) according to claim 5, wherein the beam splitting element (702) comprises an Abbe-König prism (704) having a polarizing beam-splitter coating configured to transmit the first polarized component (118a) of the detection light (118), and to reflect the second polarized component (118b) of the detection light (118).

7. The detection arrangement (700) according to claim 5 or 6, wherein the beam splitting element (702) comprises a Wollaston prism (602).

8. The detection arrangement (102, 200, 300, 400, 500, 600, 700) according to any one of the preceding claims, wherein at least one of the first dispersive element (122a, 202a, 502a, 608a, 710a) and the second dispersive element (122b, 202b, 502b, 608b, 710b) comprise at least one dispersing prism (506, 604, 706).

9. The detection arrangement (102, 200, 400) according to claim 8, wherein the first dispersive element (122a, 202a) comprises a first dispersing prism and the second dispersive element (122b, 202b) comprises a second dispersing prism; and wherein an orientation of the first dispersing prism and an orientation of the second dispersing prism are related by a single rotation around an axis of rotation (R).

10. The detection arrangement (400) according to claim 8 or 9, wherein the first dispersive element (202a) comprises a first dispersing prism and the second dispersive element (202b) comprises a second dispersing prism; and wherein the second dispersing prism is rotated about an optical axis compared to the first dispersing prism.

11. The detection arrangement (600) according to any one of the claims 8 to 10, wherein the first dispersive element (608a) and the second dispersive element (608b) are realized by different surfaces (606a, 606b, 606c) of one dispersing prism (604).

12. The detection arrangement (500) according to any one of the claims 5 to 10, wherein the first dispersive element (502a) and the second dispersive element (502b) are realized by identical surfaces (504a, 504b) of one dispersing prism (506).

13. The detection arrangement (102) according to any one of the claims 1 to 8, wherein at least one of the first dispersive element (122a) and the second dispersive element (122b) comprises at least one of a planar grating, preferably a blazed grating, a grism, and a diffractive optical element.

14. The detection arrangement (102, 200, 400, 500, 600, 700) according to any one of the preceding claims, wherein the first beam path (130a) comprises no or at least one first reflective element (508a), and the second beam path (130b) comprises no or at least one second reflective element (508a); and wherein the number of first reflective elements (508a, 508b) and the number of second reflective elements (508a, 508b) are both even or both odd.

15. The detection arrangement (102) according to any one of the preceding claims, wherein the detection arrangement (102) comprises a pinhole (126).

16. An optical scanning microscope (100, 900), comprising
an excitation light source (110) configured to generate excitation light (116);
an objective lens (104) directed at a sample space (108) and configured to direct the excitation light (116) into the sample space (108) and to receive the detection light (118) from the sample space (108);
a scanning unit (112) arranged along a beam path between the excitation light source (110) and the objective lens (104) and configured to selectively direct the excitation light (116) into different regions of the sample space (108) via the objective lens (104);
a detection arrangement (102, 200, 300, 400, 500, 600, 700) according to any one of the preceding claims; and
a main beam splitter (114) configured to direct the excitation light (116) into the objective lens (104) via the scanning unit (112), and to direct the detection light (118) into the detection arrangement (102, 200, 300, 400, 500, 600, 700).

17. The optical scanning microscope (900), further comprising an acousto-optical device (902) being arranged downstream of the main beam splitter (114) or being a part of the main beam splitter (114), the acousto-optical device (902) being configured to receive the descanned detection light (118) and to selectively direct a part of the detection light (118) into the detection arrangement (102, 200, 300, 400, 500, 600, 700) and to direct a further part of the detection light (118) not into the detection arrangement (102, 200, 300, 400, 500, 600, 700).
